# EUROPEAN PATENT SPECIFICATION

(11) **EP 1 632 525 B1**
(45) Date of publication and mention of the grant of the patent: **02.07.2008**
(21) Application number: 05018400.1
(22) Date of filing: 24.08.2005
(51) Int. Cl.: C08K 3/00, C08K 5/00

(54) **Flame retardant compositions**
Flammhemmende Zusammensetzungen
Compositions ignifuges

(30) Priority: 01.09.2004 JP 2004254343
(43) Date of publication of application: 08.03.2006
(73) Proprietor: Dai-Ichi Kogyo Seiyaku Co., Ltd., Shimogyo-ku Kyoto-shi (JP)
(72) Inventor: Onishi, Hideaki, Otsu-shi Shiga (JP); Teramoto, Makoto, Urayasu-shi Chiba (JP)
(74) Representative: Reitstötter - Kinzebach

(56) References cited:
- WO-A-00/12593
- GB-A- 1 529 407
- US-A- 3 825 520
- US-A- 5 405 890

## Description

### FIELD OF THE INVENTION

The present invention relates to a flame retardant composition for flammable plastics. It also relates to a flame retarded plastic composition containing said flame retardant composition.

### BACKGROUND OF THE INVENTION

A variety of plastics or synthetic resins are used as parts or components of many electric and electronic devices and apparatus by virtue of their high insulating performance, high water resistance, high moldability, adequate mechanical strength, etc. They also find use in packaging materials and construction materials. However, the most of plastics are flammable and hence flame retarded for use in many applications for safety reasons. The level of flame retardancy required for plastic articles has been standardized in many applications and is becoming more stringent in recent years.

Conventionally plastics are rendered flame retardant by incorporating a brominated flame retardant and antimony trioxide into plastics. However, concern has arisen about carcinogenic dioxines and other compounds which are produced when combusting waste plastic articles containing the brominated flame retardant. Attempts have been made to replace the brominated flame retardant with halogen-free flame retardants such as phosphate esters or ammonium polyphosphate. However, the use of these halogen-free flame retardants in an amount sufficient to achieve a desired flame retardancy level necessarily compromises other requisite properties such as moldability and strength properties because the halogen-free flame retardants are far less effective than the brominate flame retardants. Consequently, a need exists for a flame retardant composition which enables the amount of brominated flame retardants needed for achieving a desired level of flame retardancy in plastic articles to be significantly reduced compared to the brominated flame retardant alone. Such a composition would be advantageous not only for environmental reasons but it enables molding scraps of flame retarded plastics to be recycled because of low contents of brominatef flame retardants.

It has been known that thermoplastic polymers may be rendered flame retardant by incorporating a free-radical generator such as 2.3-dimethyl-2,3-diphenylbutane or dicumylperoxide. The free-radical generator selectively breaks the main chain of polymers and increases the flowability of molten polymers to help the self-extinguishability thereof. Following this principle, it has been known to incorporate the free-radical generator into flammable plastics in conjunction with a brominated flame retardant and/or a phosphate ester flame retardant so as to enhance the flame retardancy or to reduce the amount of the brominated flame retardant needed. See, JP-A-11/199784, JP-A-2001/181433, JP-A-2002/322323, JP-A-2003/160705, JP-A-2003/321584 and WO 00/12593. However, these prior art methods are not versatile in respect to usable polymers and/or brominated flame retardants and a relatively large amount of the radical generator is required to achieve a desired level of flame retardancy.

Accordingly, a need remains existed for a flame retardant composition and a flame retarded plastic composition which can save the brominated flame retardants while retaining a flame retardancy level sufficient to meet various flame retardancy tests.

### SUMMARY OF THE INVENTION

The above need may be met, in accordance with the present invention, by providing a flame retardant composition for flammable plastics consisting essentially of:
(a) a brominated flame retardant having a bromine content greater than 50 % by weight;
(b) a free-radical generator selected from the group consisting of 2,3-dimethyl-2,3-diphenylbutane,
   3,4-dimethyl-3,4-diphenylhexane,
   4,5-dimethyl-4,5-diphenyloctane,
   3,4-diethyl-3,4-diphenylhexane,
   4,5-diethyl-4,5-diphenyloctane,
   2,3-dimethyl-2,3-di-p-tolylbutane or
   3,4-dimethyl-3,4-di-p-tolylhexane; and
(c) a phthalocyanine or a naphthalocyanine complex with a metal selected from Mn, Tc, Re, Fe, Ru, Os, Co, Rh, Ir, Ni, Pd or Pt;
wherein the weight ratio (b) : (c) is from 99:1 to 1:99 and the sum (b) + (c) is from 0.01 to 50 parts by weight per 100 parts by weight of (a).

In a preferred embodiment, the flame retardant composition comprises
(a) a brominated flame retardant having a bromine content greater than 50 wt.%;
(b) 2,3-dimethyl-2,3-diphenylbutane; and
(c) iron phthalocyanine; wherein the weight ratio
(b):(c) is from 95:5 to 5:95, and wherein the sum of (b) + (c) is from 0.05 to 15 parts by weight per 100 parts by weight of (a).

In another aspect, the present invention provides a flame retarded plastic composition comprising a flammable plastic material and the flame retardant composition of the present invention in an amount corresponding to 0.5 to 25 parts by weight of said brominated flame retardant per 100 parts by weight of said flammable plastic material.

According to the present invention, the amount of brominated flame retardants needed to achieve a desired flame retardancy level may be significantly saved compared to that of the brominated flame retardant alone. By virtue of reduced quantity of the brominated flame retardant, many beneficial properties of plastic materials such as molding and mechanical properties may be less compromised and the environmental concern may be ameliorated. In addition, scraps produced in association with processing may be recycled.

### DETAILED DESCRIPTION

The present invention utilizes a synergism of both of the free-radical generator and the phthalocyanine or naphthalocyanic complex to save the brominated flame retardant.

The free-radical generators, otherwise called free-radical initiator, are known to generate a free radical upon heating to a temperature above the process temperature of most of plastic materials. Therefore, they remain intact during the processing such as extrusion, injection molding, compression molding, hot press lamination or the like.

Copper phthalocyanine complexe such as phthalocyanine blue and phthalocyanine green are known as a thermally stable pigment and used in the production of colored plastic articles. U.S. Patent No. 3,825,520 teaches that Fe, Cu, Mn, V and Co phthalocyanines may reduce smoke when incorporating into a styrene polymer in conjunction with octabromobiphenyl fire-retardant.

To the best of our knowledge, however, it is not known that a metal phthalocyanine or naphthalocyanine is effective to save a brominated flame retardant when incorporating in conjuntion with a free-radical generator into flammable plastic materials.

### (a) Brominated flame retardants having a bromine content greater than 50 wt.%

Brominated flame retardants are well known in the art. Non-limitative examples are as follows.

Brominated alycyclic hydrocarbons:
hexabromocyclododecane (HBCD), tetrabromocyclooctane (TBCO), monochloropentabromocyclohexane, etc.,

Brominated aromatic hydrocarbons:
pentabromotoluene, hexabromobenzene, decabromodiphenylethane, brominated polystyrene, octabromotrimethylindane, etc.,

Brominated phenyl ethers:
decabromodiphenyl ether, octabromodiphenyl ether, hexabromodiphenyl ether, bis(tribromophenoxy)ethane, bis(pentabromophenoxy)ethane, poly(2,6-dibromophenyleneoxide), etc.,

Brominated bisphenols and derivatives thereof:
tetrabromobisphenol A, tetrabromobisphenol S, tetrabromobisphenol F, tetrabromobisphenol A bis(2,3-dibromopropyl) ether, tertrabromobisphenol S bis(2,3-dibromopropyl)ether, tetrabromobisphenol F bis(2,3-dibromopropyl)ether, tetrabromobisphenol A bis(2,3-dibromoisobutyl)ether, tetrabromobisphenol S bis(2,3-dibromoisobutyl)ether, tetrabromobisphenol F bis(2,3-dibromoisobutyl)ether, tetrabromobisphenol A diallyl ether, tetrabromobisphenol S diallyl ether,

tetrabromobisphenol F diallyl ether, tetrabromobisphenol A dimethallyl ether, tetrabromobisphenol S dimethallyl ether, tetrabromobisphenol F dimethallyl ether, etc.,

Brominated isocyanurates: tri(2,3-dibromopropyl)isocyanurate, tri(2,3-dibromosiobutyl)isocyanurate, etc.,

Other brominated flame retardants: tetrabromophthalic anhydride, brominated polycarbonate, brominated epoxy resins, poly(pentabromobenzyl acrylate), ethylenebis(tetrabromophthalimide), 2,4,6-tris(2,4,6-tribromophenoxy)-1,3,5-triazine, tris(tribromoneopentyl)phosphate, etc.,

### (b) Free-radical generators

As described above, the free-radical generator used in the present invention is 2,3-dimethyl-2,3-diphenylbutane,
3,4-dimethyl-3,4-diphenylhexane, 4,5-dimethyl-4,5-diphenyloctane, 2,3-dimethyl-2,3-di-p-tolylbutane and

3,4-dimethyl-3,4-di-p-tolylhexane. 2,3-Dimethyl-2,3-diphenylbutane(dicumene) is preferable.

### (c) Phthalocyanine complex and naphthalocyanine complex

The metal phthalocyanine complex and the naphthalocyanine complex used in the present invention possesses the same or analogous ligand structure as the copper phthalocyanine pigment. However, their central atom is chosen from a metal element of groups 7 to 10 of the IUPAC periodic chart in place of copper. Typically the central atom is Mn, Tc, Re, Fe, Ru, Os, Co., Rh, Ir, Ni or Pt. Co or Fe is particularly preferable. The central atom may also be coordinated with a halogen ion, typically chloride ion. The phthalocyanine or naphthalogyanine ligand may have a substituent such as Cl, Br, alkyl, alkoxy, carboxyl or amino on the benzene ring. Phthalocyanine complexes and naphthalocyanine complexes having a central metal other than the above-mentioned metal species such as Cu, Ti, Zn, V or Cr have no or little effect to save the brominated flame retardant when use alone or in conjuction with the free-radical generator.

The ratio of (b):(c) in the flame retardant composition is 99:1 to 1:99, preferably 90:10 to 10:90, most preferably 75:25 to 25:75 by weight. The proportion of the sum of (b) + (c) is 0.01 to 50, preferably 0.1 to 30 and most preferably 0.2 to 20 parts by weight per 100 parts by weight of (a).

The flame retardant composition of the present invention is incorporated into flammable plastic materials. The quantity of the composition to be incorporated may vary depending on the desired flame retardancy, the nature of particular components (a), (b) and (c) and the presence of auxiliary flame retardants such as antimony trioxide and/or halogen-free flame retardants such as phosphate esters. This quantity ranges generally from 0.5 to 25, preferably from 1.0 to 15 by weight in terms of (a) per 100 parts of weight of the flammable plastic material. As stated above, this quantity should not be excessive as far as the desired flame retardancy may be achieved.

The flammable plastic materials to be rendered flame retardant are mostly thermoplastics. Non-limitative examples thereof include polystyrene, high impact polystyrene (HI-PS), styrene-butadiene copolymer, styrene-acrylonitrile copolymers, acrylonitrile-butadiene-styrene copolymer (ABS), polyethylene tetraphthalate (PET), polybutylene terephthalate, liquid crystalline polyester, polycarbonate, polyamide, polyphenyleneoxide, modified polyphenyleneoxide, polyphenylenesulfide, polyacetal, polyethylene, polypropylene, ethylene-vinyl acetate copolymer, ethylene-propylene copolymer, ethylene-1-butene copolymer, ethylene-propylene-non-conjugated diene copolymer, ethylene-ethyl acrylate copolymer, ethylene-glycidyl methacrylate copolymer, ethylene-vinyl acetate-glycidylmethacryalte copolymer, maleic anhydride-modified ethylene-propylene copolymer, polyester-polyether elastomer, polyester-polyester elastomer, polyamide-polyether-elastomer, polyamide-polyester elastomer, and polymer blends and polymer alloys thereof. Polystyrene, HI-PS, polypropylene, ABS, polycarbonate and polyamide are typical examples of plastics used for fabricating plastic articles in large quantities. The flame retardant composition of the present invention finds use in thermosetting plastics or resins. For example, the compostion may be incorporated into laminates of phenol, epoxy or unsaturated polyester resin having paper or glass fiber substrates.

A portion of the brominated flame retadant (a) in the flame retardant composition may be replaced by a halogen-free phosphorus-based flame retardant to further save the brominate flame retardant (a) as far as the desired flame retardancy is achieved. Non-limitative examples of the phosphorus-based flame retardants include triphenyl phosphate, tricreyl phosphate, trixylenyl phosphate, diphenylcresyl phosphate, trixylenyl phosphate, resorcinol-bis(diphenyl)phosphate, bisphenol A -bis(diphenyl)phosphate, resorcinol-bis(dicresyl) phosphate, bisphenol A-bis(dicresyl)phosphate, resorcinol-bis(di-2,6-xylenyl)phosphate, bisphenol A-bis(2,6-xylenyl)phosphate, phenoxyphosphazene, methylphenoxyphosphazene, xylenoxyphosphazene, methoxyphosphazene, ethoxyphosphazene, proxyphosphazene, melamine polyphosphate, and ammonium polyphosphate. The phosphorus-based flame retardant may generally replace for the brominated flame retardant up to about 50%.

The flame retarded plastic composition may optionally comprise other conventional additives. One such optional additive is an auxiliary antioxidant such as antimony trioxide, antimony pentaoxide, tin oxide, zinc stannate, zinc stannate hydroxide, molybdenum oxide, ammonium molybdate, zirconium oxide, zirconium hydroxide, zinc borate, zinc metaborate or barium metaborate. Antimony trioxide is most preferable. The quantity of the auxiliary flame retardant, if incorporate, may range from 0.1 to 10 parts by weight per 100 parts by weight of the flammable plastic material. Examples of other conventional additives include heat stabilizers, antioxidants, UV absorbers, UV stabilizers, impact strength enhancers, pigments, fillers, lubricants, dripp retardants, crystalline nuclei agents, mold release agents, antioxidants and compatibilizers. These conventional additives are well known in the plastic processing art and details thereof may be found in many handbooks relating to the plastic processing technology.

When foamed plastic articles are intended, a blowing agent is incorporated in the flame retarded plastic composition optionally in conjuction with a foam nuclei agent or foam conditioning agent. Examples of the blowing agent include volatile organic blowing agents such as propane, butane, pentane, hexane, 1-chloro-1,1-difluoroethane, monochlorodifluoromethane, monochloro- 1, 2, 2, 2-tetrafluoroethane, 1,1-difluoroethane, 1,1,1,2-tetrafluoroethane or 1,1,3,3,3-pentafluoropropane; inorganic blowing agents such as water, nitrogen or carbon dioxide; and chemical blowing agents such as azo compounds. Typical examples of foam nuclei agents or foam conditioning agents are talc and bentonite. The quantity of the blowing agent may vary depending on the desired properties of foams and generally ranges between 0.005 to 0.7 mole/100g of the plastic material.

The flame retarded plastic composition of the present invention may be prepared by the known method. In case of thermoplastic polymers, the flame retardant composition and optional additives are melt-blended using known apparatus such as biaxial extruders, Barnbury mixer, laboplastomills or hot roll mills and then molded into a desired shape by extruding, injection molding or compression molding. The flame retardant composition and the optional additives may be blended together or separately. In case of foams, the blowing agent may be directly injected into the molten plastic composition in the extruder. Alternatively, plastic beads containing the flame retardant and optional additives may be impregnated with a liquid blowing agent such as pentane followed by heating the beads in a mold with steam.

In case of thermosetting plastics such as phenol resin, the flame retardant and optional additives may be incorporated into oligo-condensates or varnish in conjunction with a curing catalyst, if needed, and the mixture may be cast or lamination molded.

### EXAMPLES

The following are examples of the present invention and are not to be construed as limiting. Unless otherwise indicated, all percentages and parts are by weight.

The materials used in Examples and Comparative Examples are as follows.

### A. Plastic material

A-1: High impact polystyrene available from Toyo Styrene Co., Ltd. under the name of TOYO STYROL H450
A-2: High impact polystyrene available from Toyo Styrene Co., Ltd. under the name of TOYO STYROL H650
A-3: Polypropylene available from Sumitomo Chemical Co., Ltd. under the name of SUMITOMO NOBLEN Y101S.
A-4: A 70:30 blend of polycarbonate available from Idemitsu Petrochemical Co., Ltd. under the name of TARFLON A 2000 and ABS available Toray Industries, Inc. under the name of TOYOLAC
A-5: Polyamide available from Asahi Kasei Corporation under the name of REONA 1300S
A-6: High density polyethylene available from Idemitsu Petrochemical Co., Ltd. under the name of IDEMITSU HD130J
A-7: Polystyrene available from Toyo Styrene Co., Ltd. under the name of TOYO STYROL G220
A-8: Phenol resin varnish

### B. Brominated flame retardant

B-1: Tetrabromobisphenol
   A-bis(2,3-dibromopropyl)ether
B-2: Tetrabromobisphenol
   A-bis(2,3-dibromoisobutyl)ether
B-3: Tris(2,3-dibromopropyl)isocyanurate
B-4: Tris(tribromoneopentyl)phosphate
B-5: 2, 4, 6-tris (2, 4, 6-tribromophenoxy) - 1, 3, 5-triazine
B-6: Decabromodiphenylethane
B-7: Decabromodiphenyl ether
B-8: Poly(2,6-dibromophenylene oxide)
B-9: Hexabromocyclododecane(HBCD)
B-10: Tetrabromobisphenol A epoxy oligomer

### C. Radical generator

2,3-dimethyl-2,3-diphenylebuthane

### D. Phthalocyanine/naphthalocyanine complex

D-1: Iron phathalocyanine
D-2: Iron phathalocyanine chloride
D-3: Cobalt phalocyanine
D-4: Iron naphthalocyanine
D-5: Copper phthalocyanine(for comparison)
D-6: Titanium phthalocyanine (for comparison)

### E. Heat stabilizer/antioxidant

E-1: Dioctyltin maleate polymer
E-2: Pentaerythritol tetrabis[3-(3,5-di-t-butyl-4-hydroxyphenyl)propionate
E-3: Bis(2,6-di-t-butyl-4-methylphenyl) pentaerythritol diphosphite

### F. Auxiliary flame retardant

Antimony trioxide

### G. Blowing agent

Pentane

### H. Foam nuclei agent (foam conditioning agent)

Talc available from Nippon Talc Kogyo Co., Ltd.

### I. Phosphorus flame retardant

Triphenyl phosphate

### Examples 1-20 and Comparative Examples 1-19

### 1. Preparation of test specimen

According to the formulations shown in Tables 1-5, various materials were blended and extruded using a biaxial extruder to prepare pellets. The pellets were then injection molded into test specimens of predetermined size. The temperature of heat cylinders of the extruder and the injection molding machine was set at the following temperatures.

| Heat cylinder temperature, °C | | | | | |
|---|---|---|---|---|---|
| Plastic material | Extruder | | Injection molding machine | | |
| | Inlet | Outlet | Inlet | Outlet | Mold |
| A- 1,A-3,A-6 | 80 | 200 | 180 | 200 | 40 |
| A-4 | 80 | 260 | 240 | 260 | 80 |
| A-5 | 80 | 300 | 280 | 300 | 80 |

### 2. Flame retardancy test

The vertical combustion method according to UL-94 standard was followed in Examples 1-16 and Comparative Examples 1-15. The size of test specimen was 125mm in length, 12.5mm in width and 3.2mm in thickness. NR indicates not rating.

In Examples 17-20 and Comparative Examples 16-18, oxygen index (LOI) was determined according to JIS K 7201 standard test.

### 3. Flexural strength

According to ASTM-D790, flexural stress was determined.

### 4. Evaluation after recycling

The pellets for making test specimens were aged in an oven kept at a constant temperature of 80°C and at a constant himidity of 95% RH for one week. The aged pellets were extruded again into pellets and injection molded into the test specimens under the same conditions as above.

Darkening of the recycled specimen was evaluated in terms of color difference Δ E of the corresponding specimen used in the initial test. The above described flame retardancy test and the flexural strenght test were repeated for the recycled specimen. The flexural strength was represented as % retension relative to the corresponding test specimen used in the initial test.

The recycling test was not conducted for specimens of Comparative Examples.

The results are shown in Tables 1-6 below.

**Table 1**

| Formulation(parts) & Test result. | EXAMPLE | | | | | |
|---|---|---|---|---|---|---|
| | 1 | 2 | 3 | 4 | 5 | 6 |
| Plastics | | | | | | |
| A ― 1 | 100 | 100 | 100 | ― | ― | ― |
| A ― 2 | ― | ― | ― | 100 | 100 | 100 |
| Brominated flame retardant | B-1 | B-3 | B-4 | B-5 | B-6 | B-7 |
| | 2.6 | 2.8 | 2.8 | 12.0 | 9.0 | 10.0 |
| Radical generator C | 0.04 | 0.06 | 0.095 | 0.06 | 0.06 | 0.06 |
| Phthalocyanine/naphthalo-cyanine complex | D-1 | D-2 | D-1 | D-1 | D-3 | D-4 |
| | 0.04 | 0.02 | 0.005 | 0.06 | 0.06 | 0.06 |
| Heat stabilizer E-1 | 0.05 | 0.05 | 0.05 | 0.05 | 0.05 | 0.05 |
| Antioxidant E-2 | 0.1 | 0.1 | 0.1 | 0.1 | 0.1 | 0.1 |
| Antimony trioxide | ― | ― | ― | 1.0 | 1.0 | 1.0 |
| Flame retardancy, UL-94 | V-2 | V-2 | V-2 | V-0 | V-0 | V-0 |
| Flexural strength, Mpa | 42 | 43 | 43 | 38 | 38 | 35 |

| After recycling | | | | | | |
|---|---|---|---|---|---|---|
| Color Difference, ΔE | 0.4 | -0.5 | 0.8 | 0.9 | 0.8 | 1.1 |
| Flame retardancy, UL-94 | V-2 | V-2 | V-2 | V-0 | V-0 | V-0 |
| % retent of flexural strength | 98 | 98 | 95 | 99 | 96 | 96 |

**Table 2**

| Formulation (parts) & Test results | COMPARATIVE EXAMPLES | | | | | |
|---|---|---|---|---|---|---|
| | 1 | 2 | 3 | 4 | 5 | 6 |
| Plastics | | | | | | |
| A ― 1 | 100 | 100 | 100 | ― | ― | ― |
| A ― 2 | ― | ― | ― | 100 | 100 | 100 |
| Brominate flame retardant | B-1 | B-3 | B-4 | B-5 | B-6 | B-7 |
| | 2.6 | 2.8 | 2.8 | 12.0 | 9.0 | 10.0 |
| Radical generator C | ― | 0.08 | 0.04 | ― | 0.12 | 0.06 |
| Phthalocyanine/naphthalo-cyanine complex | D-1 | ― | D-5 | D-1 | ― | D-6 |
| | 0.08 | ― | 0.04 | 0.12 | ― | 0.06 |
| Heat stabilizer E-1 | 0.05 | 0.05 | 0.05 | 0.05 | 0.05 | 0.05 |
| Antioxidant E-2 | 0.1 | 0.1 | 0.1 | 0.1 | 0.1 | 0.1 |
| Antimony trioxide | ― | ― | ― | 1.0 | 1.0 | 1.0 |
| Flame retardancy, UL-94 | NR | NR | NR | V-2 | V-2 | V-2 |
| Flexural strength, MPa | 42 | 35 | 42 | 38 | 38 | 36 |

| After recycling | | | | | | |
|---|---|---|---|---|---|---|
| Color difference, ΔE | ― | ― | ― | ― | ― | ― |
| Flame retardancy, UL-94 | ― | ― | ― | ― | ― | ― |
| % retent of flexural strength | ― | ― | ― | ― | ― | ― |

**Table 3**

| Formulation (parts) & Test results | EXAMPLE | | | COMPARATIVE EXAMPLE | | |
|---|---|---|---|---|---|---|
| | 7 | 8 | 9 | 7 | 8 | 9 |
| Plastics | | | | | | |
| A ― 3 | 100 | 100 | 100 | 100 | 100 | 100 |
| Brominated flame retardant | B-1 | B-3 | B-4 | B-1 | B-3 | B-4 |
| | 2.6 | 2.0 | 2.2 | 2.6 | 2.0 | 2.2 |
| Radical generator C | 0.04 | 0.04 | 0.04 | 0.06 | ― | ― |
| Phthalocyanine/naphthalo-cyanine complex | D-1 | D-3 | D-4 | ― | D-3 | ― |
| | 0.02 | 0.12 | 0.12 | ― | 0.12 | ― |
| Heat stabilizer E-3 | 0.05 | 0.05 | 0.05 | 0.05 | 0.05 | 0.05 |
| Antioxidant E-2 | 0.1 | 0.1 | 0.1 | 0.1 | 0.1 | 0.1 |
| Antimony trioxide | ― | ― | ― | ― | ― | ― |
| Flame retardancy, UL-94 | V-2 | V-2 | V-2 | NR | NR | NR |
| Flexural strength, Mpa | 47 | 47 | 46 | 42 | 46 | 47 |

| After recycling | | | | | | |
|---|---|---|---|---|---|---|
| Color difference, ΔE | 0.5 | 0.6 | 1.0 | ― | ― | ― |
| Flame retardancy, UL-94 | V-2 | V-2 | V-2 | ― | ― | ― |
| % retent of flexural strength | 98 | 98 | 95 | ― | ― | ― |

**Table 4**

| Formulation(parts) & Test results | EXAMPLE | | | | COMP. EXAMPLE | | |
|---|---|---|---|---|---|---|---|
| | 10 | 11 | 12 | 13 | 10 | 11 | 12 |
| Plastics | | | | | | | |
| A ― 4 | 100 | 100 | 100 | 100 | 100 | 100 | 100 |
| Brominated flame retardant | B-5 | B-6 | B-7 | B-5 | B-5 | B-6 | B-7 |
| | 6.0 | 5.5 | 5.0 | 7.0 | 6.0 | 5.5 | 5.0 |
| Radical generator C | 0.475 | 0.040 | 0.3 | 0.03 | ― | 0.025 | 0.5 |
| Phthalocyanine/naphthalo-cyanine complex | D-1 | D-2 | D-3 | D-4 | D-1 | D-5 | ― |
| | 0.025 | 0.475 | 0.3 | 0.03 | 0.5 | 0.475 | ― |
| Heat stabilizer E-1 | 0.05 | 0.05 | 0.05 | 0.05 | 0.05 | 0.05 | 0.05 |
| Antioxidant E-2 | 0.1 | 0.1 | 0.1 | 0.1 | 0.1 | 0.1 | 0.1 |
| Antimony trioxide | 0.5 | 0.5 | 0.5 | 1.0 | 0.5 | 0.5 | 0.5 |
| Flame retardancy, UL-94 | V-0 | V-0 | V-0 | V-0 | V-2 | NR | V-2 |
| Flexural strength, Mpa | 78 | 70 | 73 | 74 | 78 | 72 | 74 |

| After recycling | | | | | | | |
|---|---|---|---|---|---|---|---|
| Color difference, ΔE | 0.8 | 0.9 | 0.6 | 1.0 | ― | ― | ― |
| Flame retardancy, UL-94 | V-0 | V-0 | V-0 | V-0 | ― | ― | ― |
| % retent of flexural strength | 98 | 98 | 95 | 87 | ― | ― | ― |

**Table 5**

| Formulation(parts) & Test results | EXAMPLE | | | COMP. EXAMPLE | | |
|---|---|---|---|---|---|---|
| | 14 | 15 | 16 | 13 | 14 | 15 |
| Plastics | | | | | | |
| A ― 5 | 100 | 100 | 100 | 100 | 100 | 100 |
| Brominated flame retardant | B-7 | B-8 | B-8 | B-7 | B-7 | B-8 |
| | 12.0 | 12.0 | 6.0 | 12.0 | 12.0 | 12.0 |
| Radical generator C | 0.2 | 0.4 | 0.9 | ― | 0.5 | 0.4 |
| Phthalocyanine/naphthalo-cyanine complex | D-1 | D-2 | D-4 | D-1 | ― | D-6 |
| | 0.1 | 0.4 | 0.9 | 0.5 | ― | 0.4 |
| Heat stabilizer E-1 | 0.05 | 0.05 | 0.05 | 0.05 | 0.05 | 0.05 |
| Antioxidant E-2 | 0.1 | 0.1 | 0.1 | 0.1 | 0.1 | 0.1 |
| Antimony trioxide | 1.5 | 2.5 | 0.5 | 1.5 | 1.5 | 2.5 |
| Flame retardancy, UL-94 | V-0 | V-0 | V-1 | V-2 | V-2 | V-2 |
| Flexural strength, Mpa | 99 | 105 | 108 | 100 | 84 | 106 |

| After recycling | | | | | | |
|---|---|---|---|---|---|---|
| Color difference, ΔE | 1.1 | 1.2 | 1.0 | ― | ― | ― |
| Flame retardancy, UL-94 | V-0 | V-0 | V-1 | ― | ― | ― |
| % retent of flaxural strength | 90 | 92 | 95 | ― | ― | ― |

**Table 6**

| Formulation(parts) & Test results | EXAMPLE | | | | COMP. EXAMPLE | | |
|---|---|---|---|---|---|---|---|
| | 17 | 18 | 19 | 20 | 16 | 17 | 18 |
| Plastics | | | | | | | |
| A ― 6 | 100 | 100 | 100 | 100 | 100 | 100 | 100 |
| Brominated flame retardant | B-5 | B-5 | B-7 | B-8 | B-5 | B-7 | B-8 |
| | 10.0 | 8.0 | 8.0 | 8.0 | 10.0 | 8.0 | 8.0 |
| Radical generator C | 0.04 | 0.04 | 0.04 | 0.04 | ― | 0.04 | 0.04 |
| Phthalocyanine/naphthalo-cyanine complex | D-1 | D-2 | D-3 | D-1 | D-4 | ― | D-5 |
| | 0.02 | 0.12 | 0.12 | 0.06 | 0.06 | ― | 0.06 |
| Heat stabilizer E-1 | 0.05 | 0.05 | 0.05 | 0.05 | 0.05 | 0.05 | 0.05 |
| Antioxidant E-2 | 0.1 | 0.1 | 0.1 | 0.1 | 0.1 | 0.1 | 0.1 |
| Antimony trioxide | 3.0 | 2.0 | 2.0 | 2.0 | 3.0 | 2.0 | 2.0 |
| Flame retardancy, LOI | 27.5 | 26.4 | 27.0 | 27.2 | 23.8 | 23.5 | 23.8 |
| Flexural strength, Mpa | 20 | 21 | 18 | 20 | | | |

| After recycling | | | | | | | |
|---|---|---|---|---|---|---|---|
| Color difference, ΔE | 2.3 | 2.0 | 1.8 | 1.6 | ― | ― | ― |
| Flame retardancy, LOI | 27.4 | 26.4 | 26.8 | 27.1 | ― | ― | ― |
| % retent of flaxural strength | 90 | 92 | 90 | 94 | ― | ― | ― |

As shown in Tables 1-6, the flame retardancy of the formulations of Examples 1-20 is enhanced compared to that of the formulations of Comparative Examples 1-19 by incorporating the brominated flame retardant into the plastic material in conjuction with the radical generator and the phthalocyanine/naphthalocyanine complex with a metal of groups 7-10 of the periodic chart.

### Examples 21-26 and Comparative Examples 20-23

### 1. Preparation of foamed plastic specimen

According to the formulation shown in Tables 7-8, various materials excluding the blowing agent were fed to a two stage tandem extruder. The materials are heat blended in the first stage extruder having an inner diameter of 65mm and then extruded to the second stage extruder having an inner diameter of 90mm. A predetermined amount of the blowing agent was injected under pressure into the extrudate through a separate line at the forward end of the first stage extruder. The extrudate from the first stage extruder was cooled to 120°C in the second stage extruder and extruded through a die into a ribbon having a width of 45mm and a thickness of 2.5mm.

### 2. Visual evaluation of foamed extrudate

The state of the resulting extrudate was visually evaluated in accordance with the following criteria.
Good: A foamed extrudate free of crackes or voids is stably obtained.
Not good: The foamed extrudate includes a number of cracks or voids, or stable extrusion is not possible due to blowing of gas from the die.

### 3. Flame retardancy test

Oxygen index (LOI) was determined according to JIS K 7201 standard test.

### 4. Self-extinguishability

Yes= LOI equal to or greater than 26
No = LOI less than 26

### 5. Evaluation after recycling

The foamed extrudate produced in the initial extruding was crashed and aged in an oven kept at a constant temperature of 80°C and at a constant humidity of at 95% RH for one week. The aged particles were blow-extruded again under the same conditions as above. The recycled extrudate was tested for the state, the oxygen index and self-extinguishability. The recycling test was not conducted for the extrudates of Comparative Examples. The results are shown in Tables 7-8 below.

**Table 7**

| Formulation(parts) & Test results | EXAMPLE | | | | | |
|---|---|---|---|---|---|---|
| | 21 | 22 | 23 | 24 | 25 | 26 |
| Plastics | | | | | | |
| A ― 6 | 100 | 100 | 100 | 100 | 100 | 100 |
| Brominated flame retardant | B-9 | B-2 | B-1 | B-3 | B-4 | B-2 |
| | 1.0 | 1.3 | 3.5 | 3.5 | 2.5 | 0.8 |
| Radical generator C | 0.063 | 0.025 | 0.01 | 0.025 | 0.02 | 0.027 |
| Phthalocyanine/naphthalo-cyanine complex | D-1 | D-3 | D-4 | D-1 | D-2 | D-6 |
| | 0.027 | 0.025 | 0.04 | 0.025 | 0.01 | 0.003 |
| Heat stabilizer E-1 | 0.05 | 0.05 | 0.05 | 0.05 | 0.05 | 0.05 |
| Antioxidant E-3 | 0.01 | 0.01 | 0.01 | 0.01 | 0.01 | 0.01 |
| Blowing agent, mol/100g | 0.1 | 0.1 | 0.1 | 0.1 | 0.1 | 0.1 |
| Talc | 1.0 | 1.0 | 1.0 | 1.0 | 1.0 | 1.0 |
| Triphenyl phosphate | ― | ― | ― | ― | 0.8 | 0.4 |

| Initial | | | | | | |
|---|---|---|---|---|---|---|
| State | Good | Good | Good | Good | Good | Good |
| Flame retardancy, LOI | 27.1 | 27.5 | 26.8 | 26.9 | 27.4 | 26.5 |
| Self-extinguishability | Yes | Yes | Yes | Yes | Yes | Yes |

| After recycling | | | | | | |
|---|---|---|---|---|---|---|
| State | Good | Good | Good | Good | Good | Good |
| Flame retardancy, LOI | 26.8 | 26.9 | 26.8 | 26.8 | 26.6 | 26.1 |
| Self-extinguishability | Yes | Yes | Yes | Yes | Yes | Yes |

**Table 8**

| Formulation(parts) % Test results | COMP. EXAMPLE | | | |
|---|---|---|---|---|
| | 20 | 21 | 22 | 23 |
| Plastic | | | | |
| A ― 6 | 100 | 100 | 100 | 100 |
| Brominated flame retardant | B-9 | B- 1 | B-3 | B-2 |
| | 1.0 | 3.5 | 3.5 | 4.0 |
| Radical generator C | ― | 0.09 | 0.025 | ― |
| Phthalocyanine/naphthalo-cyanine complex | D-4 | ― | D-5 | ― |
| | 0.09 | ― | 0.025 | ― |
| Heat stabilizer E-1 | 0.05 | 0.05 | 0.05 | 0.05 |
| Antioxidant E-3 | 0.01 | 0.01 | 0.01 | 0.01 |
| Blowing agent, mol/100g | 0.1 | 0.1 | 0.1 | 0.1 |
| Talc | 1.0 | 1.0 | 1.0 | 1.0 |
| Triphenyl phosphate | ― | ― | ― | 0.8 |

| Initial | | | | |
|---|---|---|---|---|
| State | Good | Good | Good | Not good |
| LOI | 23.9 | 24.2 | 22.7 | 26.5 |
| Self-extinguishability | No | No | No | Yes |

As shown in Tables 7-8, the foamed extrudates of Examples 21-26 exhibited satisfactory results in the flame retardancy and the foamed state. The foamed extrudates of Comparative Examples 20-23 were not self-extinguishable although the foamed state was good. The foamed extrudate of Comparative Example 23 was self-extinguishable because of increased amount of brominated flame retardant in conjuction with a phosphate ester but observed a number of cracks and scorching.

### Examples 27-30 and Comparative Examples 24-26

### 1. Preparation of test specimen

According to the formulations shown in Table 9, all additives were mixtured with the phenol resin varnish. A sheet of kraft paper was impregnated with the resulting mixture and dried to prepare a prepreg. Then eight sheets of the prepreg were laminated in a hot press at a pressure of 150kgf/cm² at 150°C for one hour to prepare a paper-phenol resin laminate having a thickness of 1.6mm.

### 2. Flame retardancy test

The vertical combustion method according to UL-95 standard was followed using a test specimen of 125mm length, 12.5mm width and 3.2mm thickness. The results are shown in Table 9.

**Table 9**

| Formulation(parts) & Test results | EXAMPLE | | | | COMP. EXAMPLE | | |
|---|---|---|---|---|---|---|---|
| | 27 | 28 | 29 | 30 | 24 | 25 | 26 |
| Plastics | | | | | | | |
| A ― 7 (solids) | 100 | 100 | 100 | 100 | 100 | 100 | 100 |

| Brominated flame retardant | | | | | | | |
|---|---|---|---|---|---|---|---|
| B ― 10 | 6.0 | 6.0 | 7.0 | 8.0 | 8.0 | 7.0 | 7.0 |
| Radical generator C | 0.38 | 0.02 | 0.1 | 0.03 | ― | 0.38 | 0.4 |
| Phthalocyanine | D-1 | D-2 | D-3 | D-4 | D-1 | D-5 | ― |
| naphthalocyanine complex | 0.02 | 0.38 | 0.1 | 0.03 | 0.4 | 0.02 | ― |
| Flame retardancy, UL-94 | V-0 | V-0 | V-0 | V-0 | V-2 | V-2 | V-2 |

As shown in Table 9, the laminates of Examples 27-30 exhibited enhanced flame retardancy compared to the laminate of Comparative Examples 24-26.

## Claims

1. A flame retardant composition consisting essentially of:
(a) a brominated flame retardant having a bromine content greater than 50 % by weight;
(b) a free-radical generator selected from the group consisting of
2,3-dimethyl-2,3-diphenylbutane,
3,4-dimethyl-3,4-diphenylhexane,
4,5-dimethyl-4,5-diphenyloctane,
3,4-diethyl-3,4-diphenylhexane,
4,5-diethyl-4,5-diphenyloctane,
2,3-dimethyl-2,3-di-p-tolylbutane or
3,4-dimethyl-3,4-di-p-tolylhexane; and
(c) a phthalocyanine or a naphthalocyanine complex with a metal selected from Mn, Tc, Re, Fe, Ru, Os, Co, Rh, Ir, Ni, Pd or Pt;
wherein the weight ratio (b) : (c) is from 99:1 to 1:99 and the sum (b) + (c) is from 0.01 to 50 parts by weight per 100 parts by weight of (a).

2. The flame retardant composition according to claim 1 wherein said ratio (b):(c) is from 90:10 to 10:90.

3. The flame retardant composition according to claim 2 wherein said ratio (b):(c) is from 75:25 to 25:75.

4. The flame retardant composition according to any one of the preceding claims wherein said sum (b) + (c) is from 0.1 to 30 parts by weight per 100 parts by weight of (a).

5. The flame retardant composition according to any one of the preceding claims wherein said free-radical generator is 2,3-dimethyl-2,3-diphenyl-butane and wherein said metal of said complex is iron or cobalt.

6. A flame retarded plastic composition comprising:
(a) a flammable plastic material;
(b) 0.5 to 25 parts by weight per 100 parts by weight of said plastic material of the flame retardant composition according to any one of claims 1 to 5.

7. The flame retarded plastic composition of claim 6 wherein said flammable plastic material is a thermoplastic polymer.

8. The flame retarded plastic composition according to claim 7 wherein said thermoplastic polymer is polystyrene, polyolefin, polyamide, polycarbonate, copolymers or blends thereof.

9. A shaped plastic article obtainable from the flame retarded plastic composition of any one of claims 6 to 8.

## Patentansprüche

1. Flammfeste Zusammensetzung, bestehend im Wesentlichen aus:
(a) einem bromierten Flammschutzmittel mit einem Bromgehalt, der größer ist als 50 % Gew.-%;
(b) einem Generator freier Radikale, der ausgewählt ist aus der Gruppe, bestehend aus
2,3-Dimethyl-2,3-diphenylbutan,
3,4-Dimethyl-3,4-diphenylhexan,
4,5-Dimethyl-4,5-diphenyloctan,
3,4-Diethyl-3,4-diphenylhexan,
4,5-Diethyl-4,5-diphenyloctan,
2,3-Dimethyl-2,3-di-p-tolylbutan oder
3,4-Dimethyl-3,4-di-p-tolylhexan; und
(c) einem Phthalocyanin- oder einem Naphthalocyaninkomplex mit einem Metall, das ausgewählt ist unter Mn, Tc, Re, Fe, Ru, Os, Co, Rh, Ir, Ni, Pd oder Pt;
wobei das Gewichtsverhältnis (b) : (c) von 99:1 bis zu 1:99 ist und die Summe (b) + (c) 0.01 bis zu 50 Gewichtsteile pro 100 Gewichtsteilen (a) beträgt.

2. Flammfeste Zusammensetzung nach Anspruch 1, wobei das Verhältnis (b):(c) von 90:10 bis zu 10:90 ist.

3. Flammfeste Zusammensetzung nach Anspruch 2, wobei das Verhältnis (b):(c) von 75:25 bis zu 25:75 ist.

4. Flammfeste Zusammensetzung nach einem der vorhergehenden Ansprüche, wobei die Summe (b) + (c) 0.1 bis zu 30 Gewichtsteile pro 100 Gewichtsteile (a) beträgt.

5. Flammfeste Zusammensetzung nach einem der vorhergehenden Ansprüche, wobei der Generator freier Radikale 2,3-Dimethyl-2,3-diphenyl-butan und das Metall des Komplexes Eisen oder Kobalt ist.

6. Flammfeste Kunststoffzusammensetzung, umfassend:
(a) ein entflammbares Kunststoffmaterial;
(b) 0.5 bis 25 Gewichtsteile der flammfesten Zusammensetzung nach einem der Ansprüche 1 bis 5 pro 100 Gewichtsteile des Kunststoffmaterials.

7. Flammfeste Kunststoffzusammensetzung nach Anspruch 6, wobei das entflammbare Kunststoffmaterial ein thermoplastisches Polymer ist.

8. Flammfeste Kunststoffzusammensetzung nach Anspruch 7, wobei das thermoplastische Polymer ausgewählt ist unter Polystyrol, Polyolefin, Polyamid, Polycarbonat, Copolymeren oder Gemischen davon.

9. Geformter Kunststoffartikel, der aus der flammfesten Kunststoffzusammensetzung nach einem der Ansprüche 6 bis 8 erhältlich ist.

## Revendications

1. Composition ignifuge comportant essentiellement :
a) un agent ignifuge bromé, présentant une teneur de brome supérieure à 50 % en poids ,
b) un générateur de radicaux libres choisi dans le groupe comportant les composés ci-après :
2,3-diméthyl 2,3-diphényl butane
3,4-diméthyl 3,4-diphényl hexane
4,5-diméthyl 4,5-diphényl octane
3,4-diéthyl 3,4-diphényl hexane
4,5-diéthyl 4,5-diphényl octane
2,3-diméthyl 2,3-di p-tolyl butane
3,4-diméthyl 3,4-di-p-tolyl hexane
et c) un complexe de phtalocyanine ou naphtalocyanine avec un métal choisi parmi Mn, Tc, Re, Fe, Ru, Os, Co, Rh, Ir, Ni, Pd, Pt,
dans laquelle le rapport pondéral b) / c) est compris entre 99/1 et 1/99 et dans laquelle le total b) + c) est compris entre 0,01 et 50 parties en poids pour 100 parties en poids de a).

2. Composition ignifuge suivant la revendication 1, dans laquelle le rapport b) / c) est compris entre 90/10 et 10/90.

3. Composition ignifuge suivant la revendication 2, dans laquelle le rapport b) / c) est compris entre 75/25 et 25/75.

4. Composition ignifuge suivant l'une quelconque des revendications précédentes, dans laquelle le total b) + c) est compris entre 0,1 et 30 parties en poids pour 100 parties en poids de a).

5. Composition ignifuge suivant l'une quelconque des revendications précédentes, dans laquelle ledit générateur de radicaux libres est le 2,3-diméthyl 2,3-diphényl butane et dans laquelle le métal dudit complexe est le fer ou le cobalt.

6. Composition de matière plastique ignifuge comportant :
a) une matière plastique inflammable,
b) 0,5 à 25 parties en poids de la composition ignifuge suivant l'une quelconque des revendications 1 à 5 pour 100 parties en poids de la matière plastique selon l'une quelconque des revendications 1 à 5.

7. Composition ignifuge suivant la revendication 6, dans laquelle ladite matière plastique inflammable est un polymère thermoplastique.

8. Composition ignifuge suivant la revendication 8, dans laquelle ladite matière plastique inflammable est en polystyrène, polyoléfine, polyamide, polycarbonate, leurs copolymères, ou leurs mélanges.

9. Article de matière plastique tel qu'obtenu par mise en forme de la composition ignifuge de matière plastique suivant l'une quelconque des revendications 6 à 8.
